# EUROPEAN PATENT APPLICATION

(11) **EP 1 492 313 A1**
(43) Date of publication of application: **29.12.2004**
(21) Application number: 03291589.4
(22) Date of filing: 27.06.2003
(51) Int. Cl.: H04M 1/253, H04L 29/06

(54) **Hybrid telecommunications terminal, that may function in functional or stimuli mode**

(71) Applicant: ALCATEL, 75008 Paris (FR)
(72) Inventor: Olivier, François, 67115 Plobsheim (FR); Gass, Raymond, 67150 Bolsenheim (FR)
(74) Representative: Rausch, Gabriele, Dr.

(57) **Abstract**

The present invention mainly concerns a hybrid telecommunications terminal, in particular telephone set, comprising at least one input device and at least one output device.

Said terminal (1) also comprises means (4) allowing said terminal (1) to work in a functional mode, means (5) allowing said terminal or part of said terminal (1) to work in a stimuli mode and means (6) able to set the functioning mode of said terminal (1) and to manage the connections of and the relationship between the different aforementioned devices (2, 3) and means (4, 5).

## Description

The present invention is related to the field of the telecommunications, in particular telecommunications systems and terminals, and concerns a hybrid telecommunications terminal, a method for operating the same and a telecommunications system comprising at least one such terminal.

Nowadays, mainly two families of architectures have been standardised and developed by terminal manufacturers, i.e.:
- functional terminals, with protocols such as DSS1 (Digital Signalling System 1), SIP (Session Initiation Protocol), H.323, ...
- stimuli terminals, with proprietary or standard megaco stimuli protocol (H.248 standard).

Stimuli terminals are usually driven by a controller, the so called media gateway controller in the megaco architecture. This controller will directly handle the various pieces of hardware inside the terminal, such as microphone, loudspeaker, screen, keypad, etc.

Functional terminals, such as SIP terminals, will handle by themselves the internal pieces of hardware inside the terminal, and provide high level external interface.

Both aforementioned types of terminals have their own drawbacks and/or restrictions.

Indeed, stimuli terminals do entirely rely on their controller for all actions and functions and their confort and flexibility of use are limited.

Functional terminals can only be accessed via messages based on the concerned specific protocol, and are handled depending on the context of the communication.

It would be appealing to be able to handle both types of messages and commands and to benefit of the advantages of both architectures, but until now no appropriate solution has been proposed, in particular due to the obvious incompatibility of the two architectures.

It is a major aim of the present invention to propose such a solution.

Thus, the main object of the invention is to propose a hybrid telecommunications terminal, in particular a telephone set, comprising at least one input device and at least one output device, characterised in that said terminal also comprises means allowing said terminal to work in a functional mode, means allowing said terminal or part of said terminal to work in a stimuli mode and means able to set the functioning mode of said terminal and to manage the connections of and the relationship between the different aforementioned devices and means.

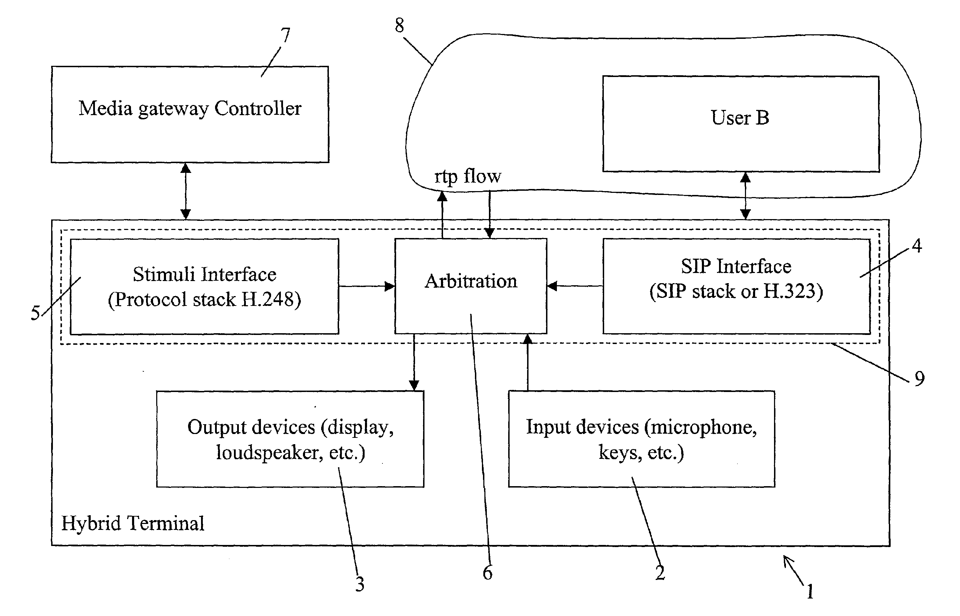

The invention will be better understood thanks to the following supplementary description of additional features and advantages, and will now be described in more details, by way of example, in relation to a non limitative embodiment shown on the enclosed figure representing in a schematical and functionnal maner a hybrid telecommunications terminal according to the invention.

The enclosed figure shows a hybrid telecommunications terminal 1, in particular telephone set, comprising at least one input device 2 and at least one output device 3.

According to the invention, said terminal 1 also comprises means 4 allowing said terminal 1 to work in a functional mode, means 5 allowing said terminal or part of said terminal 1 to work in a stimuli mode and means 6 able to set the functioning mode of said terminal 1 and to manage the connections of and the relationship between the different aforementioned devices 2, 3 and means 4, 5.

In order to have a functional terminal at hand and still be able to have stimuli commands or actions directed to specific parts of the terminal, it is preferred that the functional mode be the normal or default functioning mode of the terminal 1 and that the stimuli mode be an exceptional alternative functioning mode of the latter, said stimuli mode being of higher priority than said functional mode and imposing himself upon the functional mode when needed or requested.

As shown on the enclosed drawing, the means allowing said terminal 1 to work in the functional mode comprise an adapted interface 4 associated with a least part of an application on which said functional mode is based.

Preferably, said functional mode is based on H.323 or Session Initiation Protocol (SIP).

According to an advantageous feature of the invention, said means allowing the terminal 1 to work in the stimuli mode mainly comprises an interface 5 for connection to a separate, possibly distant, media gateway controller 7 able to remotely drive or operate said terminal 1 in the alternative stimuli mode, said controller 7 being preferably based on megaco-H.248 standard.

In case the customer premises comprise several terminals 1, said controller 7 will be able to drive at least some of these latters.

According to an other advantageous feature of the invention, the functioning mode setting and managing means 6 is mainly comprised of an arbitration and control unit, able to treat incoming functional and stimuli commands, to manage simultaneous access to the various terminations of the terminal 1 and to redirect signal and data flows according to said incoming or inputted commands or data or to preprogrammed instructions.

In particular, said means 7 will be able to redirect Real Time Protocol RTP audio and/or video flow(s) in accordance with the functioning mode and the specific commands received by said terminal 1.

Thus, the arbitration and control unit 6, located within the terminal 1, is able to manage simultaneous access to the various terminations of the telephone device (example: current_status is handsfree, with loudspeaker in use; an incoming stimuli_request for voice_alarm will switch the new rtp audio flow to loudspeaker function instead of current conversation).

The means 4, 5 and 6 as software modules can be supported by a microcontroller chip 9 for example.

The hybrid terminal 1 offers the advantages of both aforementioned architectures and functioning modes, without their major drawbacks, and is particularly useful in case of emergency or alarm situations, without being limited to these services.

These advantages will become more obvious by being illustrated by the following two examples, in connection with specific situations, not to be considered as restrictive.

A normal SIP based terminal can only be accessed via SIP messages, that will be handled depending on the context of the terminal. In particular, there are nowadays no means to make use of the loudspeaker of a device when currently engaged in a conversation phase. There are specific cases, in particular emergency situations, where direct access to the loudspeaker of the terminal might be very useful. In that case, according to the invention, stimuli mode action can be initiated by the terminal's controller 7 so as to be able to broadcast an alarm (e.g. fire alarm) to any terminal with direct access to their loudspeaker and/or display.

Another example can be given in relation to enhanced 9-1-1 services. For security reasons, there is a requirement to keep conversation active and only release under the control of the emergency services. There are cases where release was performed via SIP, without control of the emergency services. It is then possible, via the stimuli-mode of operation to reactivate microphone and loudspeaker of the terminal, regardless of the status (on-hook / off-hook).

The present invention also encompasses a method for operating a telecommunication terminal 1, in particular a telephone set, comprising at least one input device 2 and at least one output device 3. Said method is characterised in that said terminal 1 is also provided with means 4 allowing said terminal 1 to work in a functional mode, means 5 allowing said terminal 1 to work in a stimuli mode and means 6 able to set the functioning mode of said terminal 1 and to manage the connections of and relationship between the different aforementioned devices 2, 3 and means 4, 5, in that said terminal is normally or by default operated in the functional mode and in that said functional mode is interrupted and said terminal 1 operated in the stimuli mode when a stimuli command, issued by a media gateway controller 7, is received by said terminal 1.

Finally, a telecommunications system can be proposed which comprises at least one media gateway controller 7 and at least one hybrid telecommunication terminal 1 as described before, operatively connected to a telecommunication network 8 and to said media gateway controller 7, and possibly operated as indicated before.

The present invention is, of course, not limited to the preferred embodiment described and represented herein, changes can be made or equivalents used without departing from the scope of the invention.

## Claims

1. Hybrid telecommunications terminal, in particular telephone set, comprising at least one input device and at least one output device, **characterised in that** said terminal (1) also comprises means (4) allowing said terminal (1) to work in a functional mode, means (5) allowing said terminal or part of said terminal (1) to work in a stimuli mode and means (6) able to set the functioning mode of said terminal (1) and to manage the connections of and the relationship between the different aforementioned devices (2, 3) and means (4, 5).

2. Hybrid telecommunication terminal according to claim 1, **characterised in that** the functional mode is the normal or default functioning mode of the terminal (1) and the stimuli mode is an exceptional alternative functioning mode of the latter, said stimuli mode being of higher priority than said functional mode.

3. Hybrid telecommunication terminal according to claim 1 or 2, **characterised in that** the means allowing said terminal (1) to work in the functional mode comprise an adapted interface (4) associated with at least part of an application on which said functional mode is based.

4. Hybrid telecommunication terminal according to anyone of claims 1 to 3, **characterised in that** said functional mode corresponds to H.323 or Session Initiation Protocol (SIP).

5. Hybrid telecommunication terminal according to anyone of claims 1 to 4, **characterised in that** said means allowing the terminal (1) to work in the stimuli mode mainly comprises an interface (5) for connection to a separate, possibly distant, media gateway controller (7) able to remotely drive or operate said terminal (1) in the alternative stimuli mode.

6. Hybrid telecommunication terminal according to claim 5, **characterised in that** said media gateway controller (7) is based on megaco-H.248 standard.

7. Hybrid telecommunication terminal according to anyone of claims 1 to 6, **characterised in that** the functioning mode setting and managing means (6) is mainly comprised of an arbitration and control unit, able to treat incoming functional and stimuli commands, to manage simultaneous access to the various terminations of the terminal (1) and to redirect signal and data flows according to said incoming or inputted commands or data or to preprogrammed instructions.

8. Hybrid telecommunication terminal according to anyone of claims 1 to 7, **characterised in that** the functioning mode setting and managing means (6) is able to redirect Real Time Protocol (RTP) audio and/or video flow(s) in accordance with the functioning mode and the specific commands received by said terminal (1).

9. Method for operating a telecommunication terminal, in particular a telephone set, comprising at least one input device and at least one output device, **characterised in that** said terminal (1) also comprises means (4) allowing said terminal (1) to work in a functional mode, means (5) allowing said terminal (1) to work in a stimuli mode and means (6) able to set the functioning mode of said terminal (1) and to manage the connections of and relationship between the different aforementioned devices (2, 3) and means (4, 5), **in that** said terminal is normally or by default operated in the functional mode and **in that** said functional mode is interrupted and said terminal (1) operated in the stimuli mode when a stimuli command, issued by a media gateway controller (7), is received by said terminal (1).

10. Telecommunication system comprising at least one media gateway controller, **characterised in that** it also comprises at least one hybrid telecommunication terminal (1) according to anyone of claims 1 to 8, operatively connected to a telecommunication network (8) and to said media gateway controller (7).
